# EUROPEAN PATENT APPLICATION

(11) **EP 4 566 877 A1**
(43) Date of publication of application: **11.06.2025**
(21) Application number: 24217749.1
(22) Date of filing: 05.12.2024
(51) Int. Cl.: B60N 2/22, B60N 2/28, B60N 2/30, B60N 2/32

(54) **VEHICLE SEAT CAPABLE OF CHANGING SEATING DIRECTION**

(30) Priority: 06.12.2023 KR 20230175930
(71) Applicant: Hyundai Transys Inc., Chungcheongnam-do 31930 (KR)
(72) Inventor: JEON, Byung Min, 18469 Hwaseong-si (KR); KIM, Kyung Ho, 16509 Suwon-si (KR); KIM, Cheon Ho, 17066 Yongin-si (KR); KIM, Hyeon Je, 16698 Suwon-si (KR); SEO, Ji Yun, 18434 Hwaseong-si (KR); LEE, Tae Kang, 08829 Seoul (KR); JANG, Jae Yong, 16684 Suwon-si (KR); HONG, Sung Kyung, 04354 Seoul (KR)
(74) Representative: Viering, Jentschura & Partner mbB Patent- und Rechtsanwälte

(57) **Abstract**

Disclosed is a vehicle seat including a seat cushion mounted on a seat rail, the seat cushion being slidably movable along the seat rail in a forward-and-rearward direction, an upper seatback rotatably coupled to the seat cushion, the upper seatback having an opening formed therein, and a lower seatback located inside the opening, the lower seatback being rotatably coupled to the seat cushion so as to be unfolded toward a rear side of the seat cushion.

## Description

### BACKGROUND

### (a) Technical Field

The present disclosure relates to a vehicle seat capable of changing a seating direction, and more particularly, to a vehicle seat capable of changing a seating direction, in which the vehicle seat enables bidirectional seating by adjusting the angles of an upper seatback and a lower seatback.

### (b) Background Art

In general, a vehicle seat has various convenience devices provided therein and configured to provide a passenger with a comfortable ride and convenience.

Examples of the convenience devices include a seat track device configured to allow the vehicle seat to be movable forwards and rearwards to fit the body shape of the passenger, a leg rest configured to support the legs of the passenger, and the like.

Recently, research and development has been actively conducted on autonomous vehicles, and various vehicle seats suitable for autonomous vehicles have also been actively developed. As a vehicle seat capable of being applied to the autonomous vehicle, research and development has been conducted on a seat structure configured to implement various modes such as a general driving mode, a conversation mode between passengers, and a relaxation mode.

An example of such a seat structure includes a swivel mechanism structure capable of rotating the vehicle seat. Here, the vehicle seat having such a swivel mechanism may be applied to the second row of a multi-purpose vehicle (MPV) or an autonomous vehicle.

Meanwhile, in the case of a vehicle seat having a conventional swivel mechanism, most functions of the vehicle seat are manually operated, resulting in inconvenience that a passenger needs to pull a lever so as to rotate the vehicle seat in a desired direction.

In addition, during rotation of the vehicle seat, the seat may interfere with other structures in the vehicle depending on the rotation radius of the seat, which may also cause inconvenience. Further, since a lever and a locking system are separately provided in the vehicle seat to implement a swivel mechanism, there is a problem in that a vehicle seat structure becomes complicated and the vehicle weight increases.

The above information disclosed in this Background section is only for enhancement of understanding of the background of the disclosure, and therefore it may contain information that does not form the prior art that is already known in this country to a person of ordinary skill in the art.

### SUMMARY OF THE DISCLOSURE

The present disclosure has been made in an effort to solve the above-described problems associated with the prior art, and it is an object of the present disclosure to provide a vehicle seat capable of changing a seating direction, in which the vehicle seat selectively enables bidirectional seating by adjusting the angles of divided seatbacks (upper seatback and lower seatback) depending on different modes such that it is not necessary to rotate the entire seat to change the seating position, thereby making it possible not only to prevent interference with other structures in the vehicle depending on the rotation radius of the seat, but also to implement bidirectional seating.

In one aspect, the present disclosure provides a vehicle seat providing multiple seating configurations, the vehicle seat including a seat cushion, an upper seatback rotatably coupled to the seat cushion, the upper seatback having an opening formed therein, and a lower seatback configured to be located inside the opening, the lower seatback being rotatably coupled to the seat cushion so as to be unfolded toward a rear side of the seat cushion, the seat cushion in conjunction with the upper seatback and the lower seat configured to form a forward seating configuration.

In a preferred embodiment, when the upper seatback is rotated to face the seat cushion and the lower seatback is rotated toward the rear side of the seat cushion, an inner edge of the opening may be exposed to form a rearward seating configuration in which a passenger is supported from behind by the inner edge.

In another preferred embodiment, the rearward seating configuration may be formed to be inclined relative to the seat cushion.

In still another preferred embodiment, an angle formed between the seat cushion and the inner edge is defined by a first line extending along the inner edge and through the opening and a second line extending along the seat cushion and may become maximum when the upper seatback and the seat cushion are rotated to be adjacent to each other, and the angle may be adjusted to gradually decrease when the upper seatback is rotated in a direction toward an initial position thereof.

In yet another preferred embodiment, when the upper seatback is rotated in a direction facing the seat cushion, the lower seatback may be configured to be rotated so as to be unfolded toward the rear side of the seat cushion in conjunction with rotation of the upper seatback.

In still yet another preferred embodiment, the lower seatback may be formed to be able to adjust the rotation angle thereof in a state of being unfolded toward the rear side of the seat cushion.

In still yet another preferred embodiment, the lower seatback may be rotated so as to be unfolded toward the rear side of the seat cushion independently of the upper seatback.

In still yet another preferred embodiment, the seat cushion is mounted on a seat rail, and the seat cushion is slidably movable along the seat rail in a forward-and-rearward direction.

In still yet another preferred embodiment, the inner edge is U-shaped.

In a further preferred embodiment, the angle is adjustable from near 0 degree to more than 90 degrees.

Other aspects and preferred embodiments of the disclosure are discussed infra.

It is understood that the terms "vehicle", "vehicular", and other similar terms as used herein are inclusive of motor vehicles in general, such as passenger automobiles including sport utility vehicles (SUV), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a diagram showing a driving mode of a vehicle seat providing multiple seating configurations according to an embodiment of the present disclosure;
FIG. 2 is a diagram showing a face-to-face mode of the vehicle seat providing multiple seating configurations according to the embodiment of the present disclosure;
FIG. 3 is a diagram showing a leg rest mode of the vehicle seat providing multiple seating configurations according to the embodiment of the present disclosure;
FIGs. 4 and 5 are diagrams each showing a rotation structure of an upper seatback of the vehicle seat providing multiple seating configurations according to the embodiment of the present disclosure; and
FIGs. 6 and 7 are diagrams each showing a rotation structure of a lower seatback of the vehicle seat providing multiple seating configurations according to the embodiment of the present disclosure.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, preferred embodiments of the present disclosure will be described in detail with reference to the attached drawings.

Advantages and features of the present disclosure and methods of achieving the same will become more apparent with reference to the embodiments described below in detail in conjunction with the accompanying drawings.

However, the present disclosure is not limited by the embodiments described below and may be implemented in various forms. The embodiments are provided to ensure that the present disclosure is complete, and to fully inform the scope of the present disclosure to those skilled in the art to which the present disclosure pertains, and the present disclosure is only defined by the scope of the claims.

In describing the embodiments disclosed herein, when it is determined that a detailed description of publicly known techniques to which the present disclosure pertains may obscure the gist of the present disclosure, detailed description thereof will be omitted.

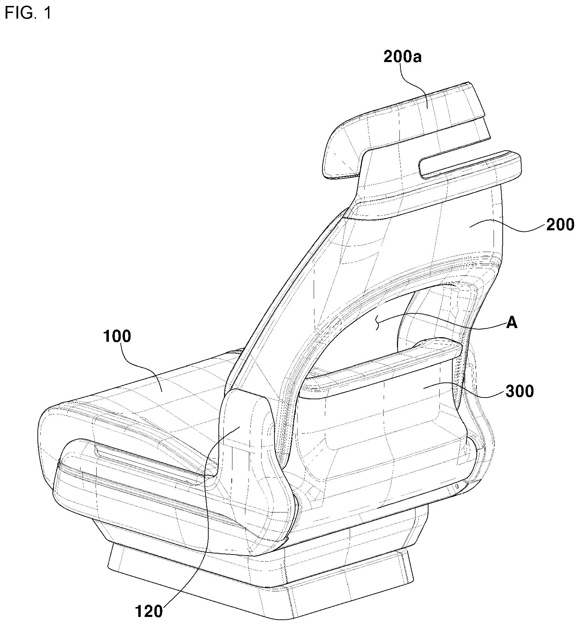

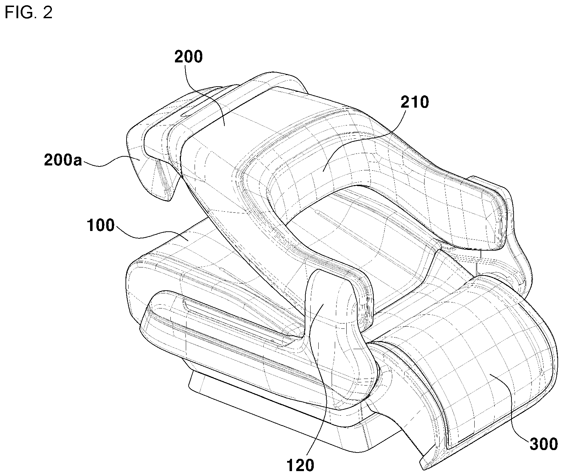

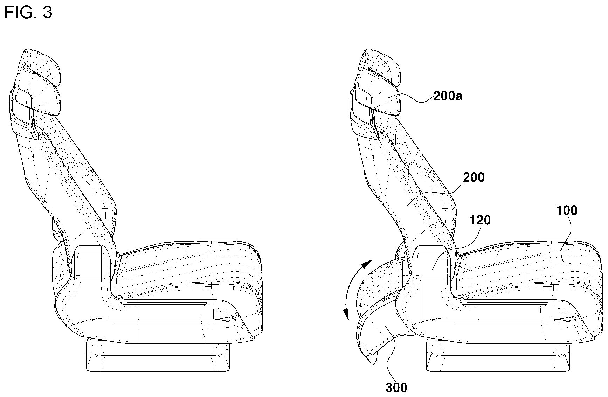

FIG. 1 is a diagram showing a driving mode of a vehicle seat providing multiple seating configurations according to an embodiment of the present disclosure, FIG. 2 is a diagram showing a face-to-face mode of the vehicle seat providing multiple seating configurations according to the embodiment of the present disclosure, and FIG. 3 is a diagram showing a leg rest mode of the vehicle seat providing multiple seating configurations according to the embodiment of the present disclosure.

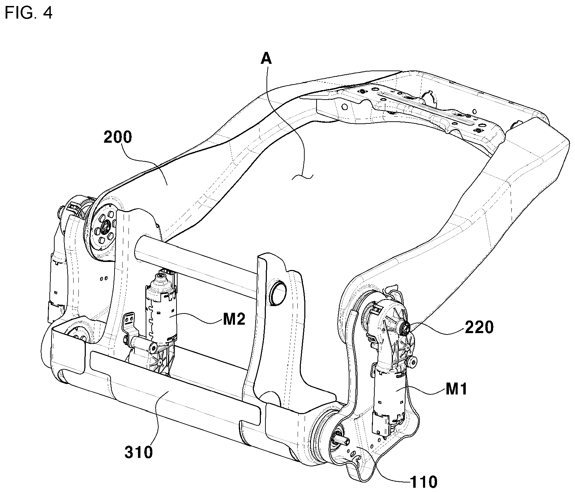

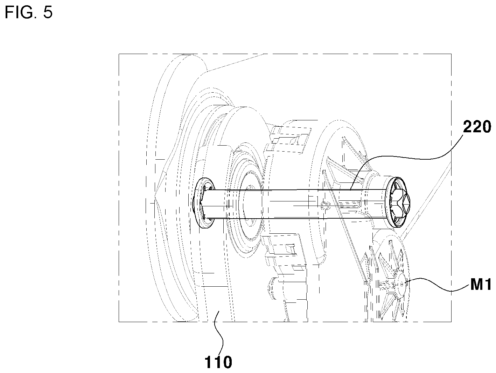

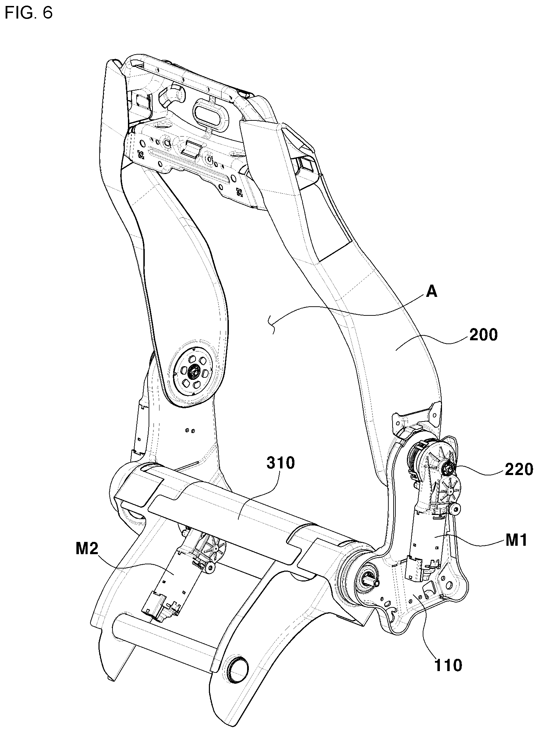

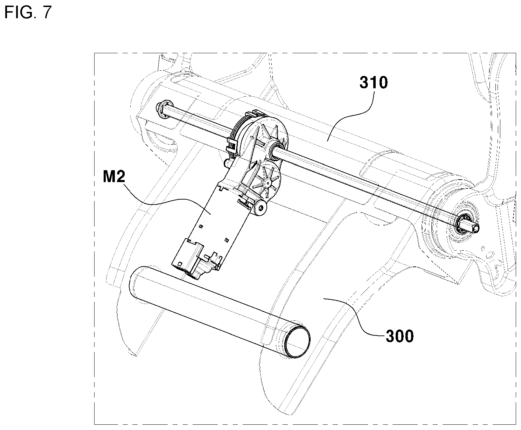

FIGs. 4 and 5 are diagrams each showing a rotation structure of an upper seatback of the vehicle seat providing multiple seating configurations according to the embodiment of the present disclosure, and FIGs. 6 and 7 are diagrams each showing a rotation structure of a lower seatback of the vehicle seat providing multiple seating configurations according to the embodiment of the present disclosure.

As shown in FIG. 1, the vehicle seat providing multiple seating configurations according to the present embodiment includes a seat cushion 100, an upper seatback 200, and a lower seatback 300. The seat cushion in conjunction with the upper seatback and the lower seat may be configured to form a forward seating configuration.

The seat cushion 100 is provided to allow the lower body of a passenger to be positioned and seated thereon and is configured to be mounted on a seat rail (not shown) so as to be slidably movable in the forward-and-rearward direction.

The upper seatback 200 includes a headrest 200a to support the head of the passenger. Further, the upper seatback is rotatably connected to the seat cushion 100 and has an opening A formed therein.

That is, the upper seatback 200 is rotatably connected to the seat cushion 100 by respectively connecting one side of the upper seatback and the other side thereof to a pair of connecting guides 110 (refer to FIG. 4). The upper seatback is formed to have a "C"-shaped structure and has the opening A formed therein in a state of being connected to the connecting guides 110.

As shown in FIG. 2, when the upper seatback 200 is selectively rotated toward a position facing the seat cushion 100 and the lower seatback is rotated toward the rear side of the seat cushion in response to the operation of the passenger, a U-shaped inner edge 210 formed by the opening A is exposed to form a rearward seating configuration in which a passenger is supported from behind by the inner edge 210.

In other words, the upper seatback 200 is configured to support the upper body of the passenger. Specifically, in the general driving mode, the upper seatback supports the upper body of the passenger through the front surface thereof (refer to FIG. 1), and in the face-to-face mode, the upper seatback supports the upper body of the passenger sitting from behind on the seat cushion 100 through the inner edge 210 (refer to FIG. 2).

More specifically, the face-to-face mode is a mode in which the seating direction of the passenger is oriented toward the rear seat. Accordingly, in the face-to-face mode, the upper seatback 200 is rotated in a direction in which the upper seatback is folded on the seat cushion 100, thereby supporting the upper body of the passenger sitting toward the rear seat through the inner edge 210.

Preferably, the rearward seating configuration formed by the inner edge 210 of the upper seatback 200 may be formed to be inclined relative to the seat cushion 100.

More preferably, when the upper seatback 200 is rotated in the direction in which the upper seatback is folded on the seat cushion to implement the face-to-face mode, the upper seatback 200 may be rotated in a range within which an angle between the inner edge 210 and the upper surface of the seat cushion 100, defined by a first line extending along the inner edge and through the upper seatback and a second line extending along the seat cushion, becomes greater than 90 degrees. As a result, the upper body of the passenger in the seated state in the face-to-face mode may be stably supported from behind through the inner edge 210 in the rearward seating configuration formed to be inclined relative to the seat cushion 100.

Here, the rotation range of the upper seatback 200 may be adjusted through a separate operation button (not shown) provided on a cover member 120 configured to block the external exposure of the connection guide 110. Accordingly, effective support may be provided depending on various seating postures of the passenger through the front surface of the upper seatback 200 and the inner edge 210 thereof in the general driving mode and the face-to-face mode, respectively.

More specifically, the upper seatback 200 may be rotated in the range within which the angle between the inner edge 210 and the upper surface of the seat cushion 100 becomes greater than 90 degrees, so that the angle between the seat cushion 100 and the inner edge 210 becomes maximum in a state in which the upper seatback is adjacent to the seat cushion 100. On the other hand, when the upper seatback is rotated to the initial position thereof, that is, the position at which the upper seatback stands upright, the angle between the seat cushion and the inner edge may be adjusted to gradually decrease and may be near 0 degree.

Meanwhile, the lower seatback 300 is located inside the opening A and is formed to be rotatably connected to the seat cushion 100. Here, the lower seatback is formed to be unfolded toward the rear side of the seat cushion 100.

That is, the lower seatback 300 is provided to support the lumbar vertebrae of the passenger sitting on the seat cushion 100 in the general driving mode. The lower seatback partially shields the opening A and is formed to have a predetermined height. Further, the lower seatback is connected to the connecting guide 110 so as to be selectively rotated toward the rear side of the seat cushion 100 (refer to FIG. 4).

Preferably, the lower seatback 300 may be operated in conjunction with the upper seatback 200. More preferably, when the upper seatback 200 is rotated to face the seat cushion 100, the lower seatback 300 may be rotated in conjunction with rotation of the upper seatback in a direction in which the upper seatback is unfolded toward the rear side of the seat cushion 100.

In addition, the lower seatback 300 may be rotated to be unfolded toward the rear side of the seat cushion 100 independently of the upper seatback 200, and the rotation angle of the lower seatback may be adjusted in the stated of being unfolded toward the rear side of the seat cushion 100.

In other words, the lower seatback 300 may be operated in conjunction with the upper seatback 200. That is, when the upper seatback 200 is rotated forwards, the lower seatback may be rotated to be unfolded rearwards. Further, the lower seatback 300 may be independently rotated regardless of the operation of the upper seatback 200. In each case, the lower seatback 300 may adjust, through the separate operation button (not shown) provided on the cover member 120 configured to block the external exposure of the connecting guide 110, the rotation angle thereof in the state of being unfolded toward the rear side of the seat cushion 100 by rotation thereof.

Accordingly, when the lower seatback 300 is rotated in conjunction with forward rotation of the upper seatback 200, as shown in FIG. 2, the lower seatback may support the legs of the passenger sitting on the seat cushion 100. Additionally, when the lower seatback is independently rotated regardless of the operation of the upper seatback 200 so as to be unfolded toward the rear side of the seat cushion 100, as shown in FIG. 3, the lower seatback may provide a leg rest function to a passenger sitting on the rear seat.

Based on the above-described configuration, the operations of the upper seatback 200 and the lower seatback 300 will be described below in consideration of the driving mode, the face-to-face mode, and the leg rest mode.

### Driving Mode

In the general driving mode, the upper seatback 200 and the lower seatback 300 respectively support the passenger and the lumbar vertebrae of the passenger through the front surfaces thereof (refer to FIG. 1).

Here, the lower seatback 300 may have a shape in which the opening A is partially exposed and may be connected to the connecting guide 110. Alternatively, the lower seatback may also be formed to have a shape corresponding to the shape of the opening A, that is, a rounded shape in consideration of design elements and the like.

### Face-to-Face Mode

As shown in FIG. 4, when the operation button (not shown) is operated to switch from the driving mode to the face-to-face mode, as shown in FIG. 5, an upper shaft 220 is rotated forwards by driving of a driving motor M1, and the upper seatback 200 is rotated in a direction in which the upper seatback is folded on the seat cushion 100.

In this case, in conjunction with the above-described operation, as shown in FIG. 7, a lower shaft 310 is rotated rearwards by driving of a driving motor M2, and the lower seatback 300 is unfolded toward the rear side of the seat cushion 100.

The lower seatback 300 may be operated in conjunction with the operation of the upper seatback 200 when the mode switches to the face-to-face mode. Further, the lower seatback may be independently operated by operation of a control button (not shown) regardless of the operation of the upper seatback 200. Here, the rotation range of the lower seatback, that is, the unfolding position thereof may also be selectively adjusted by the control button (not shown).

In the face-to-face mode as described above, since the upper seatback 200 is rotated in a range within which the angle between the inner edge 210 and the upper surface of the seat cushion 100 becomes greater than 90 degrees (refer to FIG. 2), the passenger may be supported from behind by the inner edge 210, and the legs of the passenger may also be supported by the unfolded lower seatback 300.

### Leg Rest Mode

As shown in FIG. 6, when the operating button (not shown) is operated to switch from the driving mode to the leg rest mode, the lower seatback 300 is rotated independently and is unfolded toward the rear side of the seat cushion 100.

More specifically, when the operating button (not shown) is operated, the lower shaft 310 is rotated rearwards by driving of the driving motor M2 such that the lower seatback 300 is unfolded toward the rear side of the seat cushion 100 independently of the upper seatback 200 (refer to FIG. 7).

In the leg rest mode, as shown in FIG. 3, for example, a leg rest function may be provided to a passenger sitting on the rear seat of the passenger seat, that is, a passenger sitting on the seat in the second row. Further, since the angle of the lower seatback 300 unfolded toward the rear side of the seat cushion 100 may be selectively adjusted, a comfortable ride may be provided in consideration of the body shape of the passenger sitting on the seat in the second row, such as the length of the legs.

Since the present disclosure selectively enables bidirectional seating by adjusting the angles of the divided seatbacks (upper seatback and lower seatback) depending on the desired modes, it is not required to rotate the entire seat to change the seating position, thereby having an effect of preventing interference with other structures in the vehicle due to the rotation radius of the seat and implementing bidirectional seating.

As a result, according to the present disclosure, it is possible not only to eliminate multiple structures required to implement the existing swivel mechanism, but also to enable a passenger to sit on the vehicle seat in both directions, thereby having an effect of simplifying a seat structure and achieving weight reduction of the seat.

In addition, according to the present disclosure, the divided seatbacks (upper seatback and lower seatback) may adjust the rotation angles thereof independently of each other, thereby having an effect of providing a leg rest function to a passenger sitting on a seat in the second row.

As is apparent from the above description, the present disclosure provides a vehicle seat providing multiple seating configurations, in which the vehicle seat enables bidirectional seating by adjusting the angles of an upper seatback and a lower seatback depending on the desired modes such as the driving mode, the face-to-face mode, and the leg rest mode. Accordingly, it is not required to rotate the entire vehicle seat to change the seating position, thereby having an effect of preventing interference with other structures in the vehicle due to the rotation radius of the seat and implementing bidirectional seating.

As a result, the present disclosure eliminates multiple structures required to implement the existing swivel mechanism and enables a passenger to sit on the vehicle seat in both directions, thereby having an effect of simplifying a seat structure and achieving weight reduction of the seat.

Furthermore, the present disclosure enables the rotation angles of the upper seatback and the lower seatback to be adjusted independently of each other, thereby having an effect of providing a leg rest function to a passenger sitting on a seat in the second row.

The present disclosure has been described in detail with reference to preferred embodiments shown in the drawings, but the embodiments are merely illustrative. It will be appreciated by those skilled in the art that various modifications may be made from the embodiments, and all or a part of the embodiments may be selectively combined with each other. Therefore, the true technical protection scope of the present disclosure should be defined by the technical spirit of the appended claims.

## Claims

1. A vehicle seat providing multiple seating configurations, the vehicle seat comprising:
a seat cushion;
an upper seatback rotatably coupled to the seat cushion, the upper seatback including an opening formed therein; and
a lower seatback configured to be located inside the opening, the lower seatback rotatably coupled to the seat cushion so as to be unfolded toward a rear side of the seat cushion,
wherein the seat cushion in conjunction with the upper seatback and the lower seat are configured to form a forward seating configuration.

2. The vehicle seat of claim 1, wherein, when the upper seatback is rotated to face the seat cushion and the lower seatback is rotated toward the rear side of the seat cushion, an inner edge of the opening is exposed to form a rearward seating configuration in which a passenger is supported from behind by the inner edge.

3. The vehicle seat of claim 2, wherein the rearward seating configuration is formed to be inclined relative to the seat cushion.

4. The vehicle seat of claim 2 or 3, wherein an angle formed between the seat cushion and the inner edge is defined by an inclined line extending along the inner edge and through the opening and a horizontal line extending along the seat cushion and becomes maximum when the upper seatback and the seat cushion are rotated to be adjacent to each other, and the angle is adjusted to gradually decrease when the upper seatback is rotated in a direction toward an initial position thereof.

5. The vehicle seat of anyone of claims 1-4, wherein, when the upper seatback is rotated in a direction facing the seat cushion, the lower seatback is configured to be rotated so as to unfold toward the rear side of the seat cushion in conjunction with rotation of the upper seatback.

6. The vehicle seat of claim 5, wherein the lower seatback is formed to be able to adjust a rotation angle thereof in a state of being unfolded toward the rear side of the seat cushion.

7. The vehicle seat of anyone of claims 1-4, wherein the lower seatback is configured to be rotated so as to unfold toward the rear side of the seat cushion independently of the upper seatback.

8. The vehicle seat of anyone of claims 1-7, wherein the seat cushion is mounted on a seat rail, and the seat cushion is slidably movable along the seat rail in a forward-and-rearward direction.

9. The vehicle seat of claim 2 or of anyone of claims 3-8 provided that in combination with claim 2, wherein the inner edge is U-shaped.

10. The vehicle seat of claim 4 or of anyone of claims 5-9 provided that in combination with claim 4, wherein the angle is adjustable from near 0 degree to more than 90 degrees.
